# EUROPEAN PATENT APPLICATION

(11) **EP 2 955 089 A1**
(43) Date of publication of application: **16.12.2015**
(21) Application number: 15170703.1
(22) Date of filing: 04.06.2015
(51) Int. Cl.: B62K 5/08, B62K 7/02, B62K 13/00, B62K 15/00, B62K 27/00

(54) **VEHICLE**

(30) Priority: 13.06.2014 NL 2012999
(71) Applicant: Biketrailer B.V., 8447 GP Heerenveen (NL)
(72) Inventor: Biketrailer B.V., 8447 GP Heerenveen (NL)
(74) Representative: 't Jong, Bastiaan Jacob

(57) **Abstract**

The invention relates to a vehicle (1), comprising:
- a frame, comprising at least a first (4) and a second wheel axle (16), these wheel axles running parallel to each other, with at least two first wheels (6,7) mounted rotatably around the first wheel axle and at least one second wheel (17) mounted rotatably around the second wheel axle, wherein the first wheel axle is mounted for rotation around a steering axis (5); and
- connecting means comprising a drawbar coupling (10), which drawbar coupling is suitable for connecting the vehicle to a tractive vehicle.

## Description

The invention relates to a vehicle.

It is known to use a vehicle for transport of all kinds of objects or people. Such a vehicle comprises a frame provided with wheels with a container thereon. The field of application of the vehicle is determined subject to the type of container. The vehicle can therefore be used for instance as carrier cycle for transport of goods, such as for instance wheelchairs, but for instance also for transport of children, or as vending cart, for instance as an ice cream cart, flower cart, herring cart and so on.

Such a vehicle can be provided with a drive. The drive can for instance consist of a mechanical drive, such as for instance pedals mounted around a crankshaft, wherein the pedals are driven by a person. The vehicle can also be provided with a motor or auxiliary motor as drive.

Such vehicles are however not suitable for transport over long distances. For transport of these vehicles it is therefore known to place the vehicles on a trailer. Trailers themselves comprise a container provided with wheels. The trailer can then be coupled via a drawbar coupling to the tow hook of a tractive vehicle, such as for instance a car.

Placing a vehicle on a trailer entails a relatively large amount of power, effort and time. Because of the power required to place the vehicle on the trailer, attempts will also be made to reduce the weight of the vehicle. For this reason it will often be desired to take the objects out of the container of the vehicle, this requiring extra power and time.

It is now an object of the invention to reduce or even obviate the above stated drawbacks.

This object is achieved according to the invention with a vehicle comprising:
- a frame, comprising at least a first and a second wheel axle, these wheel axles running parallel to each other, with at least two first wheels mounted rotatably around the first wheel axle and at least one second wheel mounted rotatably around the second wheel axle, wherein the first wheel axle is mounted for rotation around a steering axis; and
- connecting means comprising a drawbar coupling, which drawbar coupling is suitable for connecting the vehicle to a tractive vehicle.

Such a vehicle can on the one hand be used on its own. It can also be connected to a tractive vehicle, such as for instance a car, by means of the connecting means, these connecting means forming part of the vehicle, so that the vehicle can for instance be transported over greater distances. The vehicle in this way forms an assembly with the tractive vehicle.

The wheels of the vehicle are placed such that they all make contact with a ground surface. Because the wheel axles run parallel to each other and because the first wheel axle is provided with two wheels, the at least three wheels are not placed in one line, whereby the vehicle acquires a stable position. At the moment the vehicle is connected to a tractive vehicle using the connecting means, the at least one wheel mounted on the second wheel axle is lifted off the ground surface in order to increase the safety of use of the vehicle.

The steering axis makes it possible to steer the vehicle so that the vehicle can be propelled and manoeuvred in simple manner by a person.

In a first preferred embodiment of a vehicle according to the invention the frame comprises a first and a second frame part, wherein the frame parts are attached to each other for pivoting around a pivot axis between a folded-out position and a folded-up position, and wherein the first wheel axle is mounted on the first frame part and the second wheel axle is mounted on the second frame part, and wherein the pivot axis runs parallel to the wheel axles.

When the frame of the vehicle is embodied as two frame parts which are attached pivotally relative to each other, it is then possible to fold the vehicle from a folded-out position to a folded-up position so as to thereby save space.

The wheels of the vehicle are placed here such that in the folded-out position they all make contact with a ground surface. Because the pivot axis and the wheel axles run parallel to each other, stability remains guaranteed in the folded-out position. When the vehicle is folded-up to the folded-up position, the wheels mounted on the second wheel axle will move clear of the ground and the wheels on the first wheel axle, together with the wheels of the tractive vehicle, will guarantee stability.

In a preferred embodiment of a vehicle according to the invention the vehicle further comprises locking means for locking the rotation of the first wheel axle around the steering axis.

It may be desirable to lock the steering movement of the first wheel axle around the steering axis. This is particularly the case when the vehicle is used in the folded-up position. When the vehicle is attached to a tractive vehicle using the drawbar coupling, it is possible that a movement of the first wheel axle around the steering axis will cause instability, which may result in accidents. These locking means can for instance consist of a hook-like part which in the locking position clamps the first wheel axle against the first frame part. It can generally be advantageous for the locking means to be readjustable.

In a further preferred embodiment of a vehicle according to the invention the locking means are adjustable between a first position and a second position.

By embodying the locking means as part of the vehicle and giving them an adjustable form it is easy to activate the locking at all times without for instance separate means such as clamps, which can easily be lost, being necessary for this purpose. This adjustment can take place in diverse ways, for instance by rotation, sliding, anchoring, enclosing, though this adjustment is not limited to these examples.

In another preferred embodiment of a vehicle according to the invention the connecting means are adjustable between a first position and a second position.

For the same reasons as for the adjustability of the locking means, it is favourable to give the connecting means a similar adjustable form.

In yet another preferred embodiment of a vehicle according to the invention the vehicle further comprises a transmission for coupling the adjustment of the locking means to the adjustment of the connecting means.

When the vehicle is provided with both adjustable locking means and adjustable connecting means, it can be advantageous to link the adjustability of the two means to each other. At the moment the connecting means are brought into a position in which they can be connected to a tractive vehicle, it will generally also be desired for the locking means to be simultaneously driven in the direction of a blocking of the steering axis. It is possible by means of the transmission to link and thereby synchronously perform these adjusting movements.

In yet another preferred embodiment of a vehicle according to the invention the connecting means are in the first position when the locking means are in the second position, and vice versa.

At the moment that the adjustability of the locking means and the connecting means are linked, it is advantageous that specifically at the moment the connecting means are in a position in which the vehicle can be connected to a tractive vehicle the locking means block the steering axis, because the vehicle can then be made suitable in one operation for connection to a tractive vehicle. At the same time it will be desirable for the locking means to be released from the locking position when the connecting means are slid to a position in which they do not obstruct or impede the rotating movement of the first wheel axle around the steering axis.

In yet another preferred embodiment of a vehicle according to the invention the connecting means further comprise a connecting beam slidable relative to the first frame part, and the drawbar coupling is arranged on one of the outer ends of the connecting beam.

In order to make the connecting means adjustable it is advantageous for the adjusting means to comprise a connecting beam, because the control of the adjustment of the connecting means in this way takes place in simple manner. Such a connecting means is moreover inexpensive to produce and is reliable in operation because of the relatively low number of moving parts. It is moreover possible for the connecting beam to simultaneously serve as drawbar.

In yet another further preferred embodiment of a vehicle according to the invention the locking means further comprise a locking beam slidable relative to the first frame part.

For similar reasons as in the case of the connecting means, and moreover in similar manner as in the case of the connecting means, it is advantageous for the purpose of making the locking means adjustable that the adjusting means comprise a connecting beam. If the vehicle moreover comprises both a connecting beam and a locking beam, it is possible to embody these two beams integrally, i.e. by arranging both means on the same beam, for instance close to opposite ends of the beam. It is desirable here that, depending on the position of the beam, either the part with the connecting means or the part with the locking means protrudes from the first frame part.

In another preferred embodiment of a vehicle according to the invention the vehicle comprises coupling means for linking the pivoting movement of the two frame parts to the sliding movement of the connecting means and/or the locking means.

Although it is possible to embody the adjustability of the connecting means and/or locking means independently of the movement of the frame parts, it is advantageous to link these movements. Both movements will after all generally be used for the same purpose, i.e. bringing the vehicle from a folded-out position, in which the connecting means are stowed away and in which the steering axis is not blocked, to a folded-up position in which the connecting means are accessible and in which the steering axis is blocked by the locking means.

In a further preferred embodiment of a vehicle according to the invention the coupling means comprise an elongate bridge part, which bridge part is arranged with a first end on the second frame part and which bridge part is arranged with a second end on the connecting means.

It is possible by means of the bridge part to perform the coupling in simple and reliable manner. The bridge part is mounted pivotally here on the second frame part. The bridge part is preferably made from sheet material, such as sheet steel. The bridge part can likewise be arranged here on two opposite sides of the connecting means.

In a preferred embodiment of a vehicle according to the invention the vehicle further comprises a frame locking pin arranged slidably on one of the frame parts and at least one frame locking opening on the other of the frame parts for the purpose of receiving the frame locking pin and locking the pivoting movement of the two frame parts.

In order to secure the position of the two frame parts relative to each other, there can be arranged on one of the frame parts a frame locking pin which can be temporarily anchored in a frame locking opening in the other frame part in order to prevent the rotation around the pivot axis and thereby guarantee stability. The vehicle possibly comprises a plurality of frame locking pins which co-act with one frame locking opening on the other frame part, or a plurality of frame locking openings which co-act with one frame locking pin.

In another preferred embodiment of a vehicle according to the invention the vehicle further comprises a connecting locking pin arranged slidably on the connecting means or one of the frame parts, and at least one connecting locking opening on at least one of the other of the one of the frame parts or the connecting means, for the purpose of receiving the connecting locking pin and locking the relative position of the two frame parts.

In similar manner as in the case of the frame locking pin and the frame locking opening, it is likewise possible to provide a connecting locking pin and a connecting locking opening. A beam which is present can for instance thus comprise one or more connecting locking openings, and the first frame part can comprise a connecting locking pin which engages on one of these connecting locking openings in one of the positions of the vehicle. Because the connecting means are connected to the movement of the frame parts, the position of the frame parts can be locked relative to each other by means of the coupling between the frame locking pin and the frame locking opening.

It is moreover also possible for a frame locking pin and connecting locking pin to take an integrated form, wherein in one of the positions of the vehicle the pin is locked in another frame part, and in the other position in the connecting means. It is also possible for one locking pin to pass through both the connecting means and another frame part so as to further strengthen the locking.

A vehicle according to the invention can generally comprise a container mounted on the vehicle for transporting goods or persons. Such a container can take various forms, for instance though not limited to the form of a) a receptacle; b) a container adapted for the purpose of selling goods, which container is optionally provided with a cooling for preserving food products, or c) a means for anchoring for instance wheelchairs. The container is placed here such that the tilting movement of the frame parts is not obstructed by the presence, and particularly the dimensions, of the container. It is optionally also possible to secure the position of the frame parts relative to each other using a locking of the second frame part to the container.

In order to enable easy propelling of the vehicle in the folded-out position a seat, such as a saddle, can be incorporated for placing a person so that he/she can reach pedals mounted on a rotatable crankshaft with his/her legs, wherein the crankshaft is connected to at least one of the wheel axles. In order to facilitate movement during transport of heavy loads a motor can be provided which provides for or only assists the movement of the vehicle at the moment a person begins to pedal, such as for instance electric pedal assist.

These and other features of the invention are further elucidated with reference to the accompanying drawings.
Figure 1 shows a perspective view of a vehicle according to the invention in the folded-up position.
Figures 2A and 2B show side views of the vehicle according to figure 1 in respectively folded-out and folded-up position.

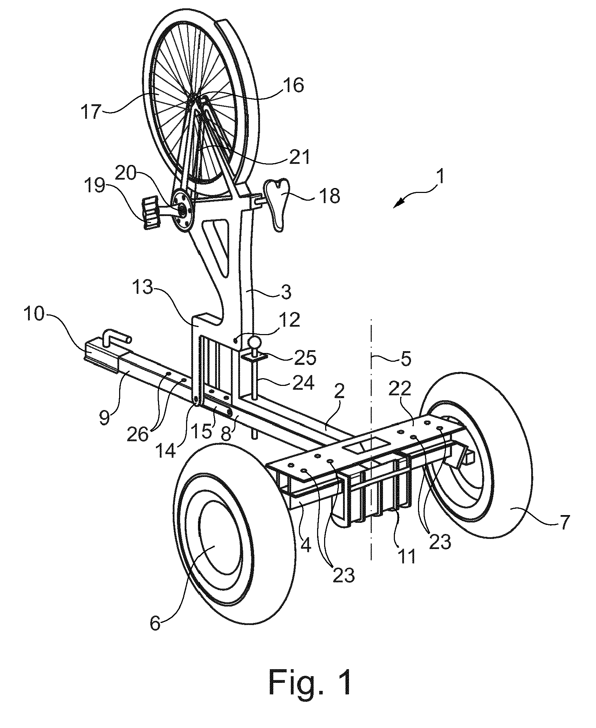

Figure 1 shows a vehicle 1 in folded-up position, comprising two frame parts 2, 3 with a first wheel axle 4 mounted on first frame part 2. In the folded-out position of vehicle 1 the first wheel axle 4 is also rotatable around steering axis 5. Two wheels 6, 7 are mounted rotatably on first wheel axle 4.

A beam 8 is arranged slidably relative to first frame part 2. Situated on first end 9 of this beam 8 is a drawbar coupling 10 for attachment to a tractive vehicle (not shown). Situated on the other end of beam 8 is a locking means 11 which engages around first wheel axle 4 such that first wheel axle 4 is pressed against first frame part 2, as a result of which the rotation of first wheel axle 4 around steering axis 5 is made temporarily impossible.

Second frame part 3 is arranged on first frame part 2 for pivoting around a pivot point 12. This second frame part 3 comprises two L-shaped connecting pieces 13 which are connected around pivot point 14 to a connecting means 15 which is mounted on slidable beam 8.

Also mounted on this second frame part 3 are a wheel 17 arranged rotatably relative to a second wheel axle 16, a saddle 18, pedals 19 on either side of second frame part 3 which are mounted rotatably around a crankshaft 20 for the purpose of driving wheel 16 by means of a chain 21.

Arranged on connecting plate 22 on first frame part 2 are diverse holes 23 on which a container (not shown) can be fixed, for instance a receptacle for the purpose of thus forming a carrier cycle. Goods can in this way be transported using vehicle 1.

A locking pin 24 is arranged on first frame part 2 for the purpose of locking the position of frame parts 2, 3 relative to each other. This locking pin 24 passes through a connecting flange 25, which is attached to first frame part 2, through an opening (not shown) in first frame part 2 and through one of the openings 26 in beam 8. Because the movement of beam 8 is linked by means of connecting pieces 12 and connecting means 14 to the pivoting movement of frame parts 2, 3 relative to each other, it is in this way possible to lock the position of frame parts 2, 3.

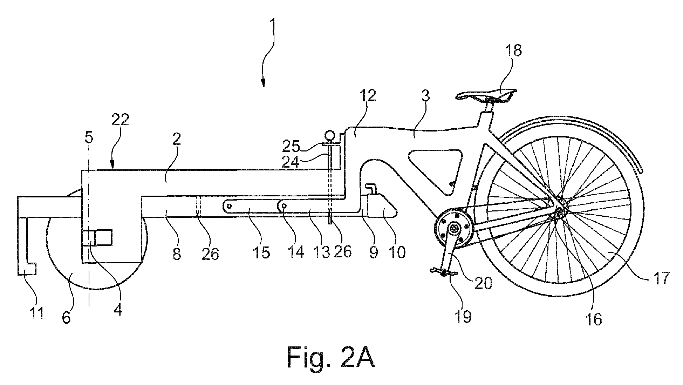

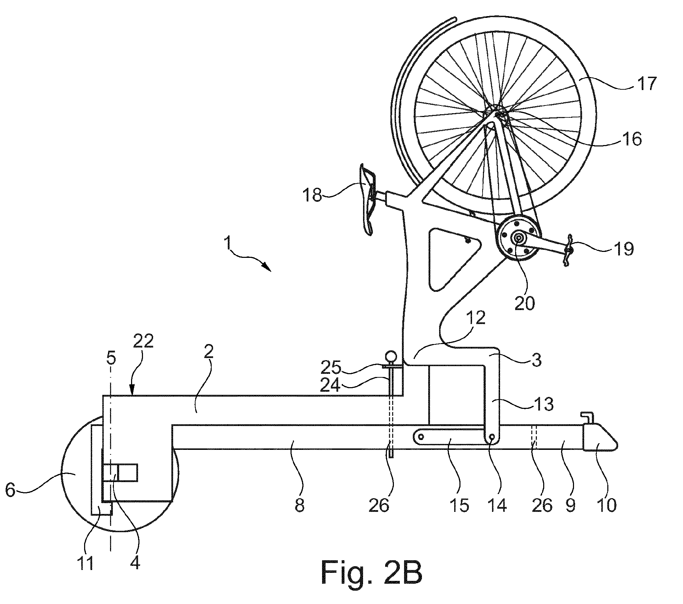

Figures 2A and 2B further illustrate the movement of frame parts 2, 3 of vehicle 1. It can be seen here in figure 2A, in which the folded-out position is shown, that in the folded-out position of vehicle 1 the drawbar coupling 10 is in a more or less stowed position and that locking means 11 lies clear of first wheel axle 4 so that this can rotate about steering axis 5.

By removing locking pin 24 from opening 26 and folding up second frame part 3 relative to first frame part 2 the L-shaped connecting piece situated on either side of first frame part 2 will tilt around pivot point 12, whereby pivot point 14 is pulled rearward and whereby beam 8 is displaced to a position as shown in figure 2B. In this position locking means 11 lies around first wheel axle 4, whereby rotation around steering axis 5 is not possible. The other end 9 of beam 8 with drawbar coupling 10 thereon has also become more accessible owing to the movement of beam 8, so that this drawbar coupling 10 can be attached to a tractive vehicle (not shown).

## Claims

1. Vehicle, comprising:
- a frame, comprising at least a first and a second wheel axle, these wheel axles running parallel to each other, with at least two first wheels mounted rotatably around the first wheel axle and at least one second wheel mounted rotatably around the second wheel axle, wherein the first wheel axle is mounted for rotation around a steering axis; and
- connecting means comprising a drawbar coupling, which drawbar coupling is suitable for connecting the vehicle to a tractive vehicle.

2. Vehicle as claimed in claim 1, wherein the frame comprises a first and a second frame part and wherein the frame parts are attached to each other for pivoting around a pivot axis between a folded-out position and a folded-up position, and wherein the first wheel axle is mounted on the first frame part and the second wheel axle is mounted on the second frame part, and wherein the pivot axis runs parallel to the wheel axles.

3. Vehicle as claimed in claim 1 or 2, further comprising locking means for locking the rotation of the first wheel axle around the steering axis.

4. Vehicle as claimed in claim 3, wherein the locking means are adjustable between a first position and a second position.

5. Vehicle as claimed in any of the foregoing claims,
wherein the connecting means are adjustable between a first position and a second position.

6. Vehicle as claimed in claim 4 and claim 5, further comprising a transmission for linking the adjustment of the locking means to the adjustment of the connecting means.

7. Vehicle as claimed in claim 6, wherein the connecting means are in the first position when the locking means are in the second position, and vice versa.

8. Vehicle as claimed in any of the foregoing claims 5-7,
wherein the connecting means further comprise a connecting beam slidable relative to the first frame part, and wherein the drawbar coupling is arranged on one of the outer ends of the connecting beam.

9. Vehicle as claimed in any of the foregoing claims 4-8,
wherein the locking means further comprise a locking beam slidable relative to the first frame part.

10. Vehicle as claimed in any of the foregoing claims 4-9, comprising coupling means for linking the pivoting movement of the two frame parts to the sliding movement of the connecting means and/or the locking means.

11. Vehicle as claimed in claim 10, wherein the coupling means comprise an elongate bridge part, which bridge part is arranged with a first end on the second frame part and which bridge part is arranged with a second end on the connecting means.

12. Vehicle as claimed in any of the foregoing claims, further comprising a frame locking pin arranged slidably on one of the frame parts and at least one frame locking opening on the other of the frame parts for the purpose of receiving the frame locking pin and locking the pivoting movement of the two frame parts.

13. Vehicle as claimed in any of the foregoing claims 10-12, further comprising a connecting locking pin arranged slidably on the connecting means or one of the frame parts, and at least one connecting locking opening on at least one of the other of the one of the frame parts or the connecting means, for the purpose of receiving the connecting locking pin and locking the pivoting movement of the two frame parts.
